# EUROPÄISCHE PATENTSCHRIFT

(11) **EP 1 868 925 B1**
(45) Veröffentlichungstag und Bekanntmachung des Hinweises auf die Patenterteilung: **13.05.2009**
(21) Anmeldenummer: 06724882.3
(22) Anmeldetag: 24.02.2006
(51) Int. Cl.: B65G 19/26, B65B 9/06

(54) **ZUFÜHRVORRICHTUNG EINER VERPACKUNGSMASCHINE**
FEEDING DEVICE FOR A PACKAGING MACHINE
DISPOSITIF D'ACHEMINEMENT POUR MACHINE D'EMBALLAGE

(30) Priorität: 08.04.2005 DE 102005016119
(43) Veröffentlichungstag der Anmeldung: 26.12.2007
(73) Patentinhaber: ROBERT BOSCH GMBH, 70442 Stuttgart (DE)
(72) Erfinder: LENHERR, Harald, 8222 Beringen (CH); FUELLEMANN, Cyrille, 8200 Schaffhausen (CH)
(86) Internationale Anmeldenummer: PCT/EP2006/060255
(87) Internationale Veröffentlichungsnummer: WO 2006/106014

(56) Entgegenhaltungen:
- FR-A- 2 448 975
- GB-A- 2 056 394
- US-A- 2 090 928
- US-A- 3 677 686
- US-A- 4 417 653
- US-A1- 2001 032 775

## Beschreibung

### Stand der Technik

Die Erfindung betrifft eine Verpackungsmaschine nach dem Oberbegriff des Anspruchs 1.

Derartige Verpackungsmaschinen sind beispielsweise aus US 3'417'544, US 6'122'898 und US 5'689'942 bekannt. Diese Publikationen offenbaren horizontale Schlauchbeutelmaschinen, in welchen Stückgüter einzeln einer Faltstation zugeführt werden, wo sie mit Verpackungsfolie umhüllt werden und die Folie zu einzelnen Schlauchbeuteln geformt, mit Siegelnähten versehen und die einzelnen Beutel voneinander getrennt werden. Damit die einzelnen Stückgüter in einem vordefinierten Abstand in die Faltstation gelangen, werden sie vorgängig von einer umlaufenden Mitnehmerkette erfasst, wobei jedes Stückgut von einem eigenen Mitnehmer transportiert und der Faltstation übergeben wird. Üblicherweise ist in Förderrichtung vor dieser Mitnehmerstrecke eine Vorlaufstrecke angeordnet, auf welcher die Produkte einen vorbestimmten Abstand erhalten und so getaktet dem Zufuhrförderer übergeben werden.

Diese Verpackungsmaschinen haben sich in der Praxis zwar bewährt. Nachteilig ist jedoch, dass die Zuführstrecke, d.h. die Vorlaufstrecke und die Länge der Zuführvorrichtung, relativ viel Platz benötigt.

Eine Verpackungsmaschine der eingangs genannten Art ist aus FR-A-2 448 975 bekannt.

### Vorteile der Erfindung

Es ist deshalb eine Aufgabe der Erfindung, die Zuführstrecke einer Verpackungsmaschine, insbesondere einer horizontalen Schlauchbeutelmaschine, zu verkürzen.

Diese Aufgabe löst eine Verpackungsmaschine mit den Merkmalen des Anspruchs 1.

Die Zuführvorrichtung der Verpackungsmaschine zur Zuführung von Stückgütern in eine Verpackungsstation dieser Maschine weist mindestens einen endlos umlaufenden Förderer mit mindestens einem Mitnehmer zur Mitnahme der zuzuführenden Stückgüter entlang eines Förderpfads auf. Dabei ist die Zuführvorrichtung derart ausgebildet, dass jeweils pro Förderer nur ein einziger dieses mindestens einen Mitnehmers gleichzeitig in eine ein zuzuführendes Stückgut (P) mitnehmende Lage bringbar ist.

Die Zuführvorrichtung eignet sich insbesondere, jedoch nicht ausschliesslich, zur Verwendung in einer horizontalen Schlauchbeutelmaschine.

Da jeweils nur ein einziges Stückgut und nicht mehrere Stückgüter gleichzeitig pro Förderer transportiert wird, lässt sich die Zuführstrecke verkürzen. Die Verkürzung kann noch verbessert werden, wenn in der Vorlaufstrecke ein Beschleunigungsförderer eingesetzt wird. Da die Stückgüter anschliessend an den Beschleunigungsförderer einzeln und mit voneinander unabhängigen Geschwindigkeiten zur Verpackungsstation gefördert werden, können sie auf dem Beschleunigungsförderer einen relativ geringen Abstand zueinander aufweisen.

Ein weiterer Vorteil ist, dass sich ein Taktband in der Vorlaufstrecke erübrigt.

Wird die Geschwindigkeit des Mitnehmers der jeweiligen Position des Stückguts angepasst, so können Fehllagen korrigiert und das Stückgut positionsgenau der Verpackungssstation übergeben werden. Das heisst, Stückgüter, welche in der Kolonne der entlang der Vorlaufstrecke angelieferten Stückgüter zu nah an ihrem vorlaufenden Nachbarstückgut liegen, können mittels des Mitnehmers verlangsamt und somit der Abstand zum vorlaufenden Nachbarn vergrössert werden. Stückgüter, welche nachhinken, das heisst einen zu grossen Abstand zu ihrem vorlaufenden Nachbarstückgut aufweisen, können mittels des Mitnehmers beschleunigt und der Abstand verringert werden. Vorzugsweise werden in beiden Fällen annähernd alle Stückgüter mittels ihrer Mitnehmer geschoben, bis sie ihre gewünschte Position erreicht haben.

Vorzugsweise wird der Mitnehmer spätestens kurz vor der Übergabe des Stückguts an das Transportmittel der Verpackungsstation auf die Fördergeschwingigkeit gebracht, welche auch dieses Transportmittel aufweist. Das Transportmittel ist bei einer horizontalen Schlauchbeutelmaschine üblicherweise das Verpackungsmaterial bzw. die Verpackungsfolie selber, so dass die Geschwindigkeit des Mitnehmers an die Fördergeschwindigkeit des Schlauchs angepasst wird.

Für den Antrieb der Mitnehmer bzw. ihrer Förderer werden vorzugsweise Servomotoren verwendet.

Ein weiterer Vorteil der Zuführvorrichtung ist, dass die Stückgüter bei gleicher Förderleistung mit einer relativ geringen Fördergeschwindigkeit der Verpackungsstation übergeben werden können. Durch die genauere Positionierung der Stückgüter im Schlauch kann eine etwas kürzere Folienabzugslänge zugelassen werden. Dies bedeutet, dass auch die Schlauchgeschwindigkeit etwas abgesenkt werden kann.

Ferner ist vorteilhaft, dass dieselbe Zuführvorrichtung für unterschiedliche Grössen von Stückgütern verwendet werden kann. Der Abstand zwischen den einzelnen Mitnehmern ist nicht mehr von Bedeutung. Dadurch muss bei einem Wechsel der Stückgutart die Teilung der Mitnehmer auf dem Förderer nicht mehr verändert werden, so dass sich ein Mitnehmerwechsel erübrigt.

Dank der Vorrichtung ist es möglich, die Zuführstrecke je nach Anlage beispielsweise um 500 bis zu 800 mm zu verkürzen.

Weitere vorteilhafte Ausführungsformen der erfindungsgemässen Verpackungsmaschine gehen aus den abhängigen Patentansprüchen hervor.

### Zeichnung

Ein Ausführungsbeispiel der Erfindung ist in der Zeichnung dargestellt und wird nachfolgend näher erläutert. Es zeigen:
Figur 1 eine Seitenansicht einer erfindungsgemässen Verpackungsmaschine mit Zuführvorrichtung und eines Teils einer Verpackungsstation in einer ersten Förderposition;
Figur 2 die Vorrichtung und Verpackungsstation gemäss Figur 1 in einer zweiten Förderposition;
Figur 3 die Vorrichtung und Verpackungsstation gemäss Figur 1 in einer dritten Förderposition und
Figur 4 eine perspektivische Darstellung der Fördervorrichtung gemäss Figur 1.

### Beschreibung des Ausführungsbeispiels

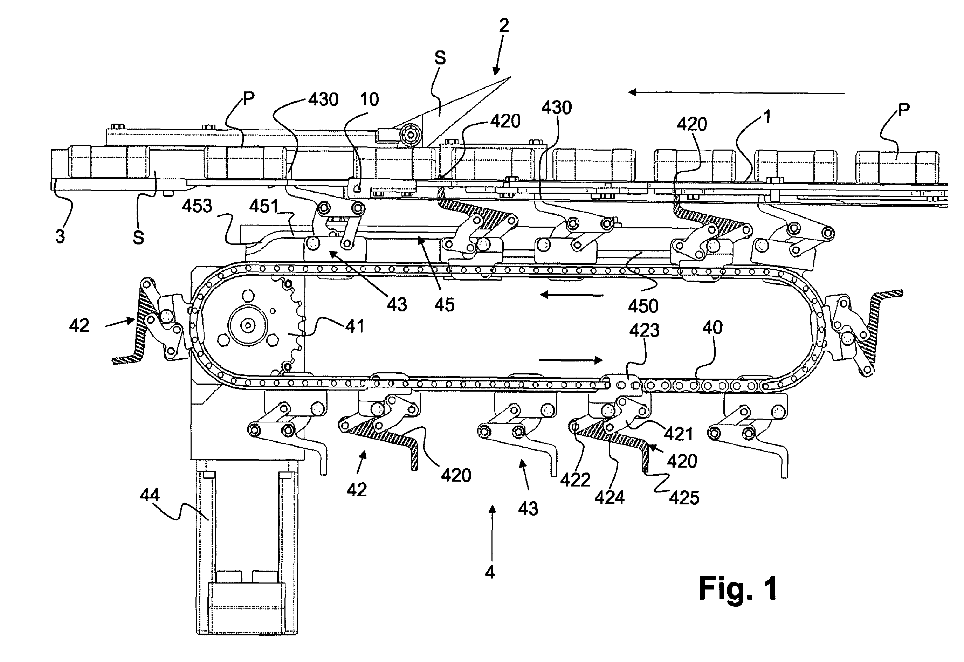

In den Figuren 1 bis 3 ist ein bevorzugtes Beispiel der Zuführvorrichtung 1, 4 zur Zuführung von Stückgütern P zu einer Verpackungsstation 2 einer Verpackungsmaschine dargestellt.

Im hier dargestellten Beispiel ist die Verpackungsmaschine eine horizontale Schlauchbeutelmaschine, d.h. die Stückgüter werden einzeln einem Packstoff S, insbesondere einer Verpackungsfolie, zugeführt, welcher um die einzelnen Stückgüter P gefaltet, mit Siegelnähten versehen und in einzelne Beutel getrennt wird. Derartige horizontale Schlauchbeutelmaschinen sind im Stand der Technik hinlänglich bekannt und werden hier deshalb nicht mehr detailliert beschrieben.

Die Stückgüter P werden von einem Förderer 1 angeliefert. Vorzugsweise ist dies ein Beschleunigungsförderer 1, welcher die Stückgüter P anliefert. Dabei sind die Abstände zwischen den einzelnen Stückgütern relativ klein. Dieser Beschleunigungsförderer 1 kann durch mindestens ein endlos umlaufendes Förderband, eine Förderkette oder ein anderes geeignetes Fördermittel gebildet sein. Seine Förderrichtung ist in den Figuren mit einem Pfeil gekennzeichnet. Das in Förderrichtung untere Ende des Beschleunigungsförderers 1 ist durch eine Umlenkrolle 10 gebildet.

Angrenzend an diesen Beschleunigungsförderer 1 und die Zuführstrecke geradlinig verlängernd ist die Verpackungsstation 2 mit ihrem Transportmittel 3 angeordnet. Das Transportmittel 3 wird in diesem bevorzugten Beispiel durch den Boden des Schlauchs S gebildet, auf welchem Boden die Stückgüter P aufliegen.

Unterhalb des im Übergangsbereich vom Beschleunigungsförderer 1 zur Verpackungsstation 2 durch Zuführstrecke und der Förderstrecke der Verpackungsstation gebildeten Förderpfads ist der erfindungsgemässe Zuführförderer 4 angeordnet. Er kann auch seitlich oder oberhalb des Förderpfads angeordnet sein.

Dieser Zuführförderer 4 ist auf einem Traggestell 44 angeordnet. Er weist mindestens eine, hier zwei endlos umlaufende Förderketten 40, 40' auf. Anstelle der Förderketten 40, 40' lassen sich auch andere Fördermittel verwenden. Die Förderketten 40, 40' sind über Antriebsrollen 41 und vorzugsweise über Servormotoren angetrieben, wobei eine zentrale Steuerung diese Motoren ansteuert.

Auf diesen Förderketten 40, 40' ist je mindestens ein Mitnehmer 42, 43 angeordnet und mittels diesen bewegbar. Im hier dargestellten bevorzugten Ausführungsbeispiel sind pro Förderkette 40, 40' mehrere Mitnehmer 42, 43 beabstandet zueinander an den Ketten 40, 40' befestigt. Dabei sind die Mitnehmer 42 des ersten Kettenförderers 40 schraffiert und die Mitnehmer 43 des zweiten Kettenförderers 40' nur mit Umrisslinien dargestellt. Die Verwendung von zwei oder mehr Förderern 40, 40' hat den Vorteil, dass mehrere Stückgüter P gleichzeitig mittels Mitnehmern transportiert werden können und somit der Durchsatz erhöht wird, ohne dass die Flexibilität im Transport der einzelnen Stückgüter P aufgegeben oder die Fördergeschwindigkeit in der Verpackungsstation 2 erhöht werden muss.

Jeder Mitnehmer 42, 43 weist einen Mitnehmerwagen 423 auf, welcher an einem oder mehreren Kettengliedern der Förderkette 40 unverschiebbar und lagefest befestigt ist. Auf diesem Mitnehmerwagen 423 sind je ein Ende eines ersten und eines zweiten Schwenkbügels 421, 422 schwenkbar befestigt. Die anderen Enden der Schwenkbügel 421, 422 sind mit einem Mitnehmerarm 420 verbunden. Dieser Mitnehmerarm 420 ist im wesentlichen L-förmig ausgebildet, wobei an seinem langen Schenkel 424 die zwei Enden der Schwenkbügel 421, 422 beabstandet zueinander schwenkbar befestigt sind und sein kurzer Schenkel 425 von der Förderkette 40 wegweist. Vorzugsweise steht der kurze Schenkel 425 annähernd senkrecht von der Förderkette 40 ab. Durch die parallele Befestigung der Schwenkbügel 421, 422 ist eine mindestens annähernd geradlinige Anhebung und Absenkung des Mitnehmerarms 420, insbesondere des kurzen Schenkels 425, möglich.

Der Zuführförderer 4 umfasst ferner mindestens eine Kulissenbahn 45, welche parallel zur mindestens einen Förderkette 40, 40' verläuft. Die Kulissenbahn 45 verläuft dabei parallel zu derjenigen Strecke des Zuführförderers 4, welche der Verpackungsstation 2 zugewandt ist. In diesem Beispiel ist dies das obere Trum des Zuführförderers 4.

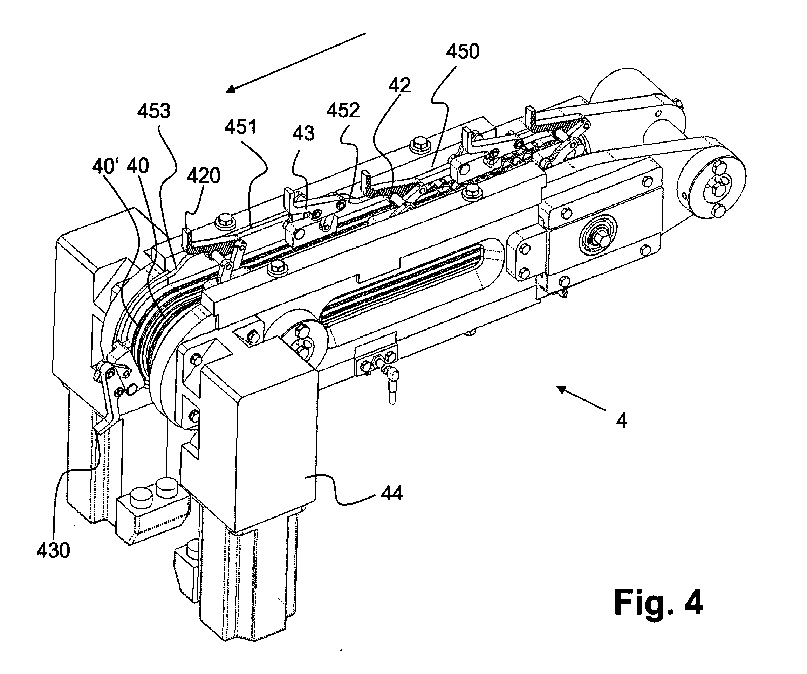

Sind zwei oder mehrere Förderketten 40, 40' vorhanden, so weist vorzugsweise jede Förderkette 40, 40' ihre eigene Kulissenbahn 45 auf. Diese Kulissenbahn 45 besitzt einen abgesenkten Streckenabschnitt 450 und einen erhöhten Streckenabschnitt 451, welche über eine Rampe 452 ineinander übergehen. Die Kulissenbahn 45 und insbesondere die Rampe 452 sind in Figur 4 gut erkennbar.

Entweder jeder Mitnehmerarm 420, jeder erste Schwenkbügel 421 oder jeder zweite Schwenkbügel 422 weist ein vorstehendes Eingriffsmittel, beispielsweise einen Noppen, auf, welcher auf der Kulissenbahn aufliegt oder, falls diese als Nut ausgebildet ist, in diese eingreift. Dadurch wird jeder Mitnehmerarm 420 beim Durchlaufen des oberen Trums des Zuführförderers 4 von einem abgesenkten Zustand entlang des abgesenkten Streckenabschnitts 450 der Kulissenbahn 45 in einen angehobenen Zustand entlang des erhöhten Streckenabschnitts 451 angehoben. Am Schluss der Kurvenbahn 45, d.h. kurz vor dem Übergang vom oberen zum unteren Trum, senkt sich die Kurvenbahn 45 wieder. Der Mitnehmer, welcher entlang dieser Endstrecke 453 verläuft, taucht somit wieder aus dem Förderpfad ab und verschwindet aus dem Bereich der Verpackungsstation 2. Dabei ist die Zuführvorrichtung so ausgelegt, d.h. die Abstände zwischen den Mitnehmern 42, 43 desselben Kettenförderers 40 in Bezug auf die Kulissenbahn 45 so gewählt, dass sich jeweils nur ein einziger Mitnehmer 42, 43 auf dem erhöhten Streckenabschnitt 451 und somit im angehobenen Zustand befindet. Auch dies ist in Figur 4 gut erkennbar.

Diese Anhebung und Absenkung des Mitnehmerarms 420, 430 wird nun dazu verwendet, die einzelnen Stückgüter in gewünschter Art und Weise zu transportieren. Dies wird im folgenden anhand der Figuren 1 bis 3 erläutert.

In Figur 1 befindet sich der in Förderrichtung vorderste Mitnehmer 43 des zweiten Kettenförderers 40' im erhöhten Streckenabschnitt 451 der Kulissenbahn 45 und somit im mitnehmenden Eingriff mit einem Stückgut P. Die auf diesem Kettenförderer 40' nachfolgenden Mitnehmer 43 befinden sich im abgesenkten Streckenabschnitt 450 und ragen somit nicht in den Förderpfad hinein. Die über ihnen angeordneten Stückgüter P werden noch ausschliesslich vom Beschleunigungsförderer 1 transportiert. Der in Förderrichtung vorderste Mitnehmer 42 des ersten Kettenförderers 40 befindet sich gerade auf der Rampe 452 der Kulissenbahn 45, so dass der Mitnehmerarm 420 nun in den Förderpfad angehoben wird.

Die Position dieses ersten vordersten Mitnehmers 42 und seine Geschwindigkeit sind unabhängig von der Position des oben beschriebenen zweiten vordersten Mitnehmers 43 und hängen nur von der Position des mitzunehmenden bzw. des der Verpackungsstation zuzuführenden Stückguts P ab. Liegt das Stückgut P zu weit vorn, so wird die erste Förderkette 40' und somit der erste Mitnehmer 42 langsamer betrieben, um den Abstand zwischen diesem Stückgut P und voranlaufenden Stückguts P zu vergrössern. Liegt das Stückgut P zu weit hinten, so wird der erste Mitnehmer 42, sobald er es kontaktiert, beschleunigt, um es vorwärts zu schieben und den Abstand zum vorderen Stückgut P zu verringern.

Diese Lagen der Stückgüter P werden vorzugsweise auf oder vor dem Beschleunigungsförderer 1 mittels mindestens eines Sensors erfasst und an die zentrale Steuerung gemeldet. Diese Steuerung steuert dann die Geschwindigkeiten des mindestens einen Kettenförderers 40, 40'. Sind mehrere Kettenförderer 40, 40' vorhanden, so werden sie vorzugsweise unabhängig voneinander angesteuert.

In einer bevorzugten Ausführungsform ist zwischen Sensor und Zuführförderer 4 mindestens ein Auswurfmittel vorhanden, beispielsweise ein in die Zuführstrecke schwenkbarer Arm, welches einzelne Stückgüter P aus der Zuführstrecke entfernt. Auswurfkriterien können sein, wenn sich beispielsweise die Position eines Stückguts P ausserhalb eines vorgegebenen Positionsbereichs befindet, oder wenn ein noch unverpacktes Stückgut Beschädigungen aufweist.

Vorzugsweise weisen alle Mitnehmer 42, 43 im Bereich der Endstrecke 451 dieselbe Geschwindigkeit auf wie das Transportmittel 3 der Verpackungsstation 2, hier also wie der aus dem Packstoff S gebildete Schlauch. Dadurch wird eine möglichst kräftefreie Übergabe der Stückgüter P an dieses Transportmittel 3 ermöglicht.

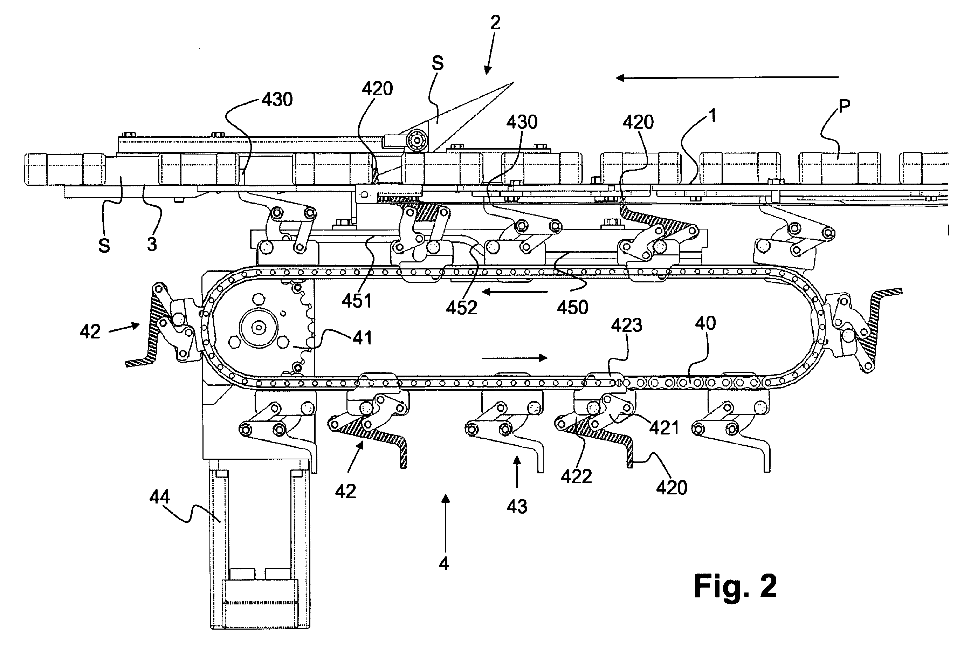

In Figur 2 ist nun erkennbar, was mit dem ersten und zweiten vordersten Mitnehmer 42, 43 anschliessend geschieht. Der zweite, immer noch führende Mitnehmer 43 ist nach wie vor im mitnehmendem Eingriff mit seinem Stückgut P. Zwischenzeitlich hat jedoch auch der erste, diesem nachfolgende Mitnehmer 42 den erhöhten Streckenabschnitt 451 erreicht und transportiert sein Stückgut P. Die übrigen Mitnehmer dieser zwei Förderketten 40, 40' befinden sich nach wie vor unterhalb des Förderpfads und stehen in keinem mitnehmendem Eingriff mit Stückgütern P.

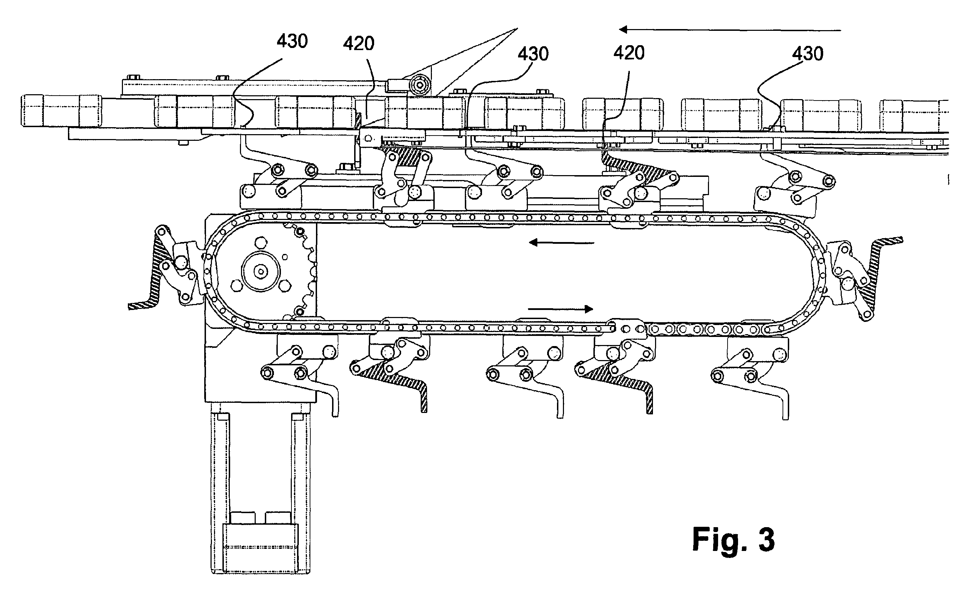

In der in Figur 3 dargestellten zu einem späteren Zeitpunkt festgehaltenen Förderposition ist nun der führende zweite Mitnehmer 43 bei der Endstrecke 453 angelangt und wird abgesenkt. Wie erkennbar ist, wird sein Stückgut P nun ausschliesslich durch den Packstoff S transportiert. Dafür befindet sich der auf dieser Förderkette 40' nachfolgende zweite Mitnehmer 43 auf der Rampe 452, wird angehoben und steht im Begriff, den Transport seines Stückguts P zu übernehmen.

Im hier beschriebenen Beispiel werden die einzelnen Geschwindigkeiten der Mitnehmer 42, 43 durch die Fördergeschwindigkeit der einzelnen Kettenförderer 40, 40' bestimmt. Diese sind vorzugsweise mittels Servomotoren angetrieben. Die Kettenförderer 40, 40' werden hier unabhängig voneinander über eine Steuerung in Abhängigkeit von Sensorsignalen, welche die Position der einzelnen Stückgüter P beinhalten, gesteuert. Um eine genaue Positionierung der Stückgüter P auf dem Packstoff S zu erzielen, werden vorzugsweise alle Stückgüter P von Mitnehmern 42, 43 geschoben, wobei die Geschwindigkeit, mit welcher geschoben wird, von der früheren detektierten Position des Stückguts P abhängt. Die Anhebung und Absenkung der einzelnen Mitnehmerarme 420, 430 werden in diesem Beispiel mittels mechanischen Mitteln in Form von Kulissenbahnen 45 erzielt.

Die unterschiedlichen Geschwindigkeiten der Mitnehmer 42, 43 und ihre Anhebung und Absenkung können jedoch auch mit anderen Mitteln erzielt werden. Insbesondere können auch die gesamten Mitnehmer angehoben oder abgesenkt werden. Beispielsweise könnte auch jeder Mitnehmer 42, 43 mittels eines eigenen Motors angetrieben werden, wobei der Motor die Anhebung und Absenkung und/oder den Vorschub des Mitnehmers 42, 43 verursacht.

Die erfindungsgemässe Vorrichtung und das erfindungsgemässe Verfahren ermöglichen somit die Verkürzung der Zuführstrecke einer Verpackungsmaschine bei gleichzeitiger Erhöhung der Positionsgenauigkeit der einzelnen Stückgüter.

### Bezugszeichenliste

- 1: Beschleunigungsförderer
- 10: Umlenkrolle
- 2: Verpackungsstation
- 3: Transportmittel
- 4: Zuführförderer
- 40: erste Förderkette
- 40': zweite Förderkette
- 41: Antriebsrolle
- 42: erster Mitnehmer
- 420: erster Mitnehmerarm
- 421: erster Schwenkbügel
- 422: zweiter Schwenkbügel
- 423: erster Mitnehmerwagen
- 424: langer Schenkel
- 425: kurzer Schenkel
- 43: zweiter Mitnehmer
- 430: zweiter Mitnehmerarm
- 44: Traggestell
- 45: Kulissenbahn
- 450: abgesenkte Streckenabschnitt
- 451: erhöhte Streckenabschnitt
- 452: Rampe
- 453: Endstrecke
- P: Stückgut
- S: Packstoff

## Patentansprüche

1. Verpackungsmaschine mit einer Verpackungsstation (2), einer Zuführvorrichtung (4) zur Zuführung von Stückgütern (P) zu einem Transportmittel (3) der Verpackungsstation (2) und einem Beschleunigungsförderer (1) zur Anlieferung der Stückgüter (P) zur Zuführvorrichtung (4), wobei die Zuführvorrichtung (4) mindestens einen endlos umlaufenden Förderer (40, 40') mit mindestens einem Mitnehmer (42, 43) zur Mitnahme der zuzuführenden Stückgüter (P) entlang eines Förderpfads aufweist, **dadurch gekennzeichnet, dass** die Zuführvorrichtung (4)unterhalb, seitlich oder oberhalb des durch den Beschleunigungsförderer (1) und das Transportmittel (3) gebildeten Förderpfads angeordnet und derart ausgebildet ist, dass jeweils pro Förderer (40, 40') nur ein einziger dieser mindestens einen Mitnehmer (42, 43) gleichzeitig in eine ein zuzuführendes Stückgut (P) mitnehmende Lage bringbar ist.

2. Verpackungsmaschine nach Anspruch 1, **dadurch gekennzeichnet, dass** jeder der mindestens einen Mitnehmer (42, 43) einzeln aus dem Förderpfad absenkbar oder anhebbar ist.

3. Verpackungsmaschine nach Anspruch 1 oder 2, **dadurch gekennzeichnet, dass** der mindestens eine Mitnehmer (42, 43) entlang einer Kulissenbahn (45) geführt ist.

4. Verpackungsmaschine nach einem der Ansprüche 1 bis 3, **dadurch gekennzeichnet, dass** der mindestens eine Mitnehmer (42, 43) im oder über dem Förderpfad verläuft.

5. Verpackungsmaschine nach einem der Ansprüche 1 bis 4, **dadurch gekennzeichnet, dass** mindestens zwei annähernd parallel zueinander verlaufende Förderer (40, 40') vorhanden sind und dass diese Förderer (40, 40') mit unterschiedlichen Fördergeschwindigkeiten betreibbar sind.

6. Verpackungsmaschine nach einem der Ansprüche 1 bis 5, **dadurch gekennzeichnet, dass** in Förderrichtung vor dem mindestens einen umlaufenden Förderer (40, 40') ein Sensor zur Erkennung der Lageposition der einzelnen zuzuführenden Stückgüter (P) angeordnet ist.

## Claims

1. Packaging machine having a packaging station (2), having a feed arrangement (4) for feeding articles (P) to a transporting means (3) of the packaging station (2), and having an accelerating conveyor (1) for delivering the articles (P) to the feed arrangement (4), the feed arrangement (4) having at least one endlessly circulating conveyor (40, 40') with at least one driver (42, 43) by means of which the articles (P) which are to be fed are carried along a conveying path, **characterized in that** the feed arrangement (4) is provided beneath, at the side of or above the conveying path formed by the accelerating conveyor (1) and the transporting means (3), and it is designed such that, for each conveyor (40, 40'), only a single one of these at least one drivers (42, 43) can be brought simultaneously into a position in which it carries along an article (P) which is to be fed.

2. Packaging machine according to Claim 1, **characterized in that** each of the at least one drivers (42, 43) can be lowered or raised individually out of the conveying path.

3. Packaging machine according to Claim 1 or 2, **characterized in that** the at least one driver (42, 43) is guided along a guide track (45).

4. Packaging machine according to one of Claims 1 to 3, **characterized in that** the at least one driver (42, 43) runs in or above the conveying path.

5. Packaging machine according to one of Claims 1 to 4, **characterized in that** at least two more or less parallel conveyors (40, 40') are present, and **in that** these conveyors (40, 40') can be operated at different conveying speeds.

6. Packaging machine according to one of Claims 1 to 5, **characterized in that** a sensor for detecting the position of the individual articles (P) which are to be fed is arranged upstream of the at least one circulating conveyor (40, 40'), as seen in the conveying direction.

## Revendications

1. Machine d'emballage comprenant un poste d'emballage (2), un dispositif d'alimentation (4) pour alimenter des articles (P) à un moyen de transport (3) du poste d'emballage (2) et un transporteur accélérateur (1) pour acheminer les articles (P) au dispositif d'alimentation (4), le dispositif d'alimentation (4) présentant au moins un transporteur (40, 40') entraîné en rotation sans fin avec au moins un dispositif d'entraînement (42, 43) pour entraîner les articles (P) à alimenter le long d'une voie de transport, **caractérisée en ce que** le dispositif d'alimentation (4) est disposé sous, à côté de ou au-dessus de la voie de transport formée par le transporteur accélérateur (1) et le moyen de transport (3) et est réalisé de telle sorte qu'à chaque fois, pour chaque transporteur (40, 40'), ledit dispositif d'entraînement ou seulement un seul desdits dispositifs d'entraînement (42, 43) puisse être amené simultanément dans une position entraînant un article (P) à alimenter.

2. Machine d'emballage selon la revendication 1, **caractérisée en ce que** ledit dispositif d'entraînement ou chacun desdits dispositifs d'entraînement (42, 43) peut être abaissé ou soulevé individuellement depuis la voie de transport.

3. Machine d'emballage selon la revendication 1 ou 2, **caractérisée en ce que** l'au moins un dispositif d'entraînement (42, 43) est guidé le long d'une piste à coulisse (45).

4. Machine d'emballage selon l'une quelconque des revendications 1 à 3, **caractérisée en ce que** l'au moins un dispositif d'entraînement (42, 43) s'étend dans ou sur la voie de transport.

5. Machine d'emballage selon l'une quelconque des revendications 1 à 4, **caractérisée en ce qu'**il est prévu au moins deux transporteurs (40, 40') s'étendant approximativement parallèlement l'un à l'autre et **en ce que** ces transporteurs (40, 40') peuvent fonctionner avec différentes vitesses de transport.

6. Machine d'emballage selon l'une quelconque des revendications 1 à 5, **caractérisée en ce que** dans la direction de transport, avant l'au moins un transporteur (40, 40') entraîné en rotation, est disposé un capteur permettant de détecter la position de support des articles (P) à alimenter individuellement.
